## Europäisches Patentamt

## European Patent Office

## Office européen des brevets

(19)

(11) Veröffentlichungsnummer: **0 170 103**
**B1**

(12) **EUROPÄISCHE PATENTSCHRIFT**

(45) Veröffentlichungstag der Patentschrift:
07.01.88

(51) Int. Cl.⁴: **B 25 J 15/02**

(21) Anmeldenummer: **85108336.0**

(22) Anmeldetag: **05.07.85**

(54) Greifvorrichtung.

(30) Priorität: **04.08.84 DE 3428889**

(43) Veröffentlichungstag der Anmeldung:
**05.02.86 Patentblatt 86/6**

(45) Bekanntmachung des Hinweises auf die Patenterteilung:
**07.01.88 Patentblatt 88/1**

(84) Benannte Vertragsstaaten:
**CH DE FR GB IT LI SE**

(56) Entgegenhaltungen:
**FR - A - 1 181 485**
**FR - A - 2 454 878**
**FR - A - 2 505 239**
**GB - A - 2 024 770**
**US - A - 3 051 327**
**US - A - 3 312 496**
**US - A - 3 370 213**
**US - A - 4 036 374**

(73) Patentinhaber: **ROBERT BOSCH GMBH, Postfach 50,
D-7000 Stuttgart 1 (DE)**

(72) Erfinder: **Jenner, Martin, Dipl.-Ing. (FH),
Trompetergässle 13, D-7140 Ludwigsburg (DE)**
Erfinder: **Konold, Peter, Dipl.-Ing., Esslinger Strasse 12,
D-7146 Tamm (DE)**
Erfinder: **Steegmüller, Helmut, Im Vogelsang 15,
D-7151 Affalterbach (DE)**

ACTORUM AG

## Beschreibung

### Stand der Technik

Die Erfindung geht aus von einer Greifvorrichtung nach der Gattung des Hauptanspruchs. Bei einer bekannten Greifvorrichtung dieser Gattung (US-A-3 312 496) sind die Winkelhebel über Drehgelenke mit den Greiferbacken verbunden und die den Greiferbacken zugeordneten Führungsmittel bestehen aus Laschen, die einerseits mit der Greiferbacke und andererseits mit dem Greifergrundkörper jeweils über ein Drehgelenk verbunden sind. Dadurch wird ein Kippen der Greiferbacken vermieden und ein Parallelverschieben sichergestellt. Jedoch erfolgt die Parallelverschiebung der Greiferbacken entlang kreisbogenförmiger Bahnen, so dass sie ausser ihrer eigentlichen Spannbewegung auch eine parallel zur Stellgliedachse gerichtete Bewegungskomponente ausführen, was in manchen Fällen unerwünscht oder nachteilig sein kann. Ausserdem ergibt sich durch die Vielzahl der Drehgelenke am Greifergrundkörper und an den Greiferbacken ein verhältnismässig grosses Führungsspiel der Greiferbacken, welches sich durch Verschleiss der Drehgelenke insbesondere bei hohen Beanspruchungen noch erhöht.

### Vorteile der Erfindung

Die erfindungsgemässe Anordnung mit den kennzeichnenden Merkmalen des Hauptanspruchs hat demgegenüber den Vorteil, dass die Greiferbacken exakt geradlinig in Öffnungs- und Schliessrichtung bewegt werden und dass die Führungsflächen an den Greiferbacken und den Führungsleisten wesentlich grösser ausgebildet werden können als Lagerflächen an Drehgelenken, so dass sich eine verschleissarme und auch für höhere Beanspruchungen gut geeignete Ausführung ergibt. Ausserdem ist erreicht, dass die Greiferkraft über einen verhältnismässig grossen Greifbereich hinweg gleichbleibend gross ist.

Durch die in den Unteransprüchen aufgeführten Massnahmen sind vorteilhafte Weiterbildungen der Anordnung nach dem Hauptanspruch möglich.

Eine einfache Ausführung ergibt sich, wenn der Greifergrundkörper durch das Gehäuse des Antriebsmechanismus gebildet ist, das mit seinem von den Greiferbacken abgekehrten Ende an einem Manipulator, einem Maschinengestell und dgl. befestigbar ist und am anderen Ende die Führungsleisten trägt, und wenn die Winkelhebel durch Gehäuseöffnungen auf das Stellglied geführt sind.

Bei einer Greifvorrichtung mit einem pneumatischen Antriebsmechanismus ergibt sich eine kompakte Ausführung, wenn das Stellglied aus einem Schaft und zwei von diesem beiderends getragenen Kolben gebildet ist, und wenn das Gehäuse des Antriebsmechanismus auf den schaftabgewandten Seiten der Kolben Zylinderräume bildet und diese wahlweise mit dem Druckmedium beaufschlagbar sind.

Ausserdem lässt sich durch Steuerung der Druckhöhe des Druckmediums die Greifkraft einstellen bzw. begrenzen.

### Zeichnung

Weitere Merkmale und Einzelheiten der Erfindung ergeben sich aus der nachfolgenden Beschreibung einer Ausführungsform, die auf der Zeichnung dargestellt ist.

In der Zeichnung zeigen:

Fig. 1 und 2 zwei gegeneinander um 90° verdrehte Seitenansichten der Greifvorrichtung;

Fig. 3 eine Draufsicht auf die Greifvorrichtung gemäss Fig. 1;

Fig. 4 eine geschnittene Seitenansicht der Greifvorrichtung in Blickrichtung gemäss Fig. 1 in vergrösserter Darstellung;

Fig. 5 eine Draufsicht auf die Greifvorrichtung gemäss Fig. 4 und

Fig. 6 eine Seitenansicht der Greifvorrichtung gemäss Fig. 4.

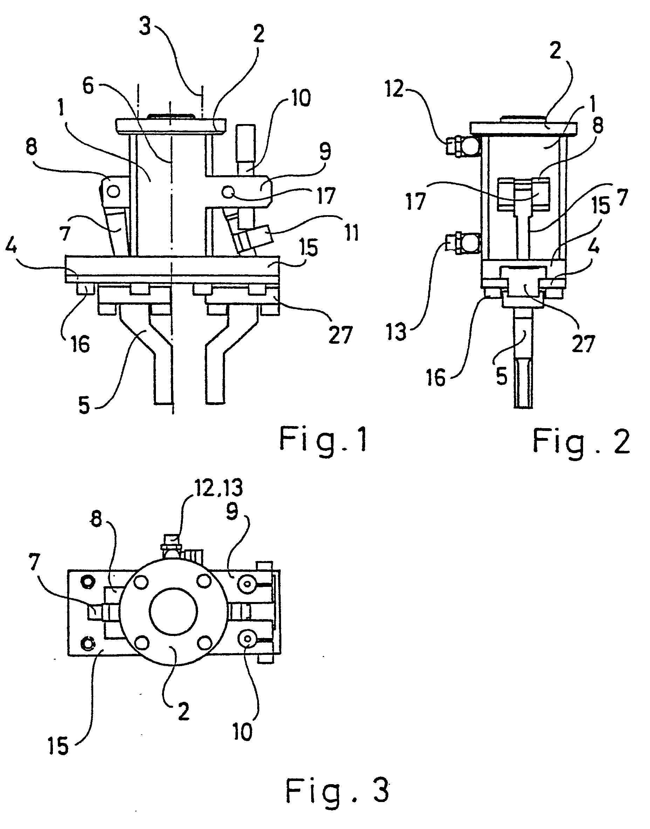

Anhand der Fig. 1 bis 3 sei zunächst der Grundaufbau der Greifvorrichtung dargestellt. Sie besteht aus einem Antriebsmechanismus 1 in Form eines zylindrischen Gehäuses. Dieses ist am einen Ende mit einem Anschlussdeckel 2 versehen, über den der Antriebsmechanismus mittels Schrauben 3 oder dgl. vor Ort befestigt werden kann. Auf der deckelabgewandten Seite sind Führungsleisten 4 angeordnet, an denen Greiferbacken 5 mit ihren Fussteilen quer zur Symmetriemittellinie 6 des Antriebsmechanismus verschiebbar geführt sind. Die Verschiebbewegung wird den Greiferbacken 5 durch Winkelhebel 7 erteilt, die zwischen Paaren von Nasen 8, 9 schwenkbar gelagert sind. Die Nasen 8, 9 sind am Gehäuse 1 in dessen vertikaler Mitte angebracht. Mit 10 sind Näherungsschalter bezeichnet, die einerseits die Geschlossen- und andererseits die Offenposition der Greiferbacken 5 abfühlen, wozu auf den den Näherungsschaltern 10 zugeordneten Winkelhebel 7 ein Schaltklemmstück 11 aufgesetzt ist. Schliesslich zeigt Fig. 2 noch zwei Druckluftanschlüsse 12 und 13 für die hin- und hergehende Bewegung des nicht ersichtlichen Stellgliedes des Antriebsmechanismus.

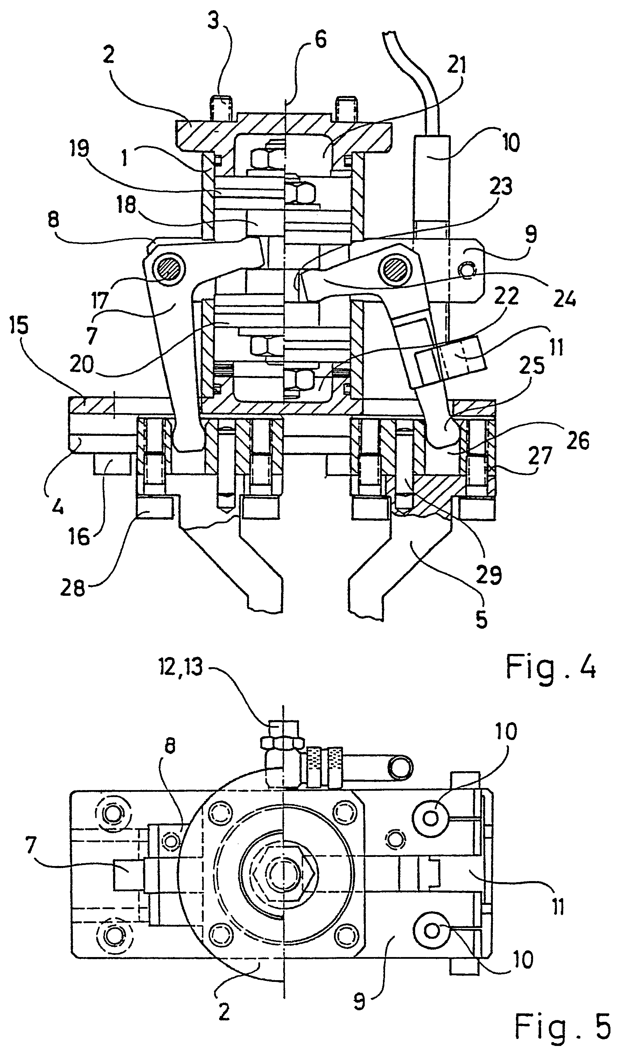

Fig. 4 zeigt die Greifvorrichtung in vergrösserter Darstellung geschnitten entsprechend der Darstellung in Fig. 1. Hier ist noch einmal ersichtlich das Gehäuse 1 des Antriebsmechanismus, der Deckel 2 und die von diesem ausgehenden Befestigungsbolzen 3. Ferner sind ersichtlich die Führungsleisten 4, die über einen Träger 15, an dem sie mittels Schrauben 16 befestigt sind, mit dem Gehäuse 1 verbunden sind, sowie die Greiferbacken 5, die Symmetriemittellinie 6, die Winkelhebel 7 und die Nasen 8, 9. Wie ersichtlich, sind die Winkelhebel zwischen den Nasenpaaren 8, 9 und damit am Gehäuse 1 über Bolzen 17 schwenkbar gelagert.

Innerhalb des Gehäuses ist ein Stellglied koaxial zur Symmetriemittellinie 6 verschiebbar angeordnet, das aus einem Schaft 18 besteht, der endständig Kolben 19 und 20 trägt. Für diese ist durch das Gehäuse 1 sowie den Deckel 2 einerseits und den Träger 15 andererseits auf der schaftabgewandten Seite je ein Zylinderraum 21, 22 gebildet, von denen jeder durch einen der Druckmittelanschlüsse, 12, 13 gemäss Fig. 2 beaufschlagbar ist.

Der Schaft weist eine Ringnut 23 auf, in die die Winkelhebel 7 mit in diesem Falle an ihrem einen freien Ende gebildeten Kugelköpfen 24, Zylinderköpfen oder dgl. eingreifen.

Am anderen Ende der Winkelhebel sind hier ebenfalls Kugelköpfe 25 gebildet, die in Aussparungen 26 der Greiferbackenfüsse 27 eingreifen, wobei diese Aussparungen 26 bezüglich ihrer Achse parallel zur Symmetriemittellinie der Greifvorrichtung angeordnet sind. Wie aus Fig. 4 ersichtlich, sind die Greiferbacken 5 an den Greiferbackenfüssen 27 über Schrauben 28 befestigt, so dass an den Greiferbackenfüssen unterschiedliche Sorten von Greiferbacken angebracht werden können. Um hier die Passung zu sichern, sind Passbolzen 29 vorgesehen.

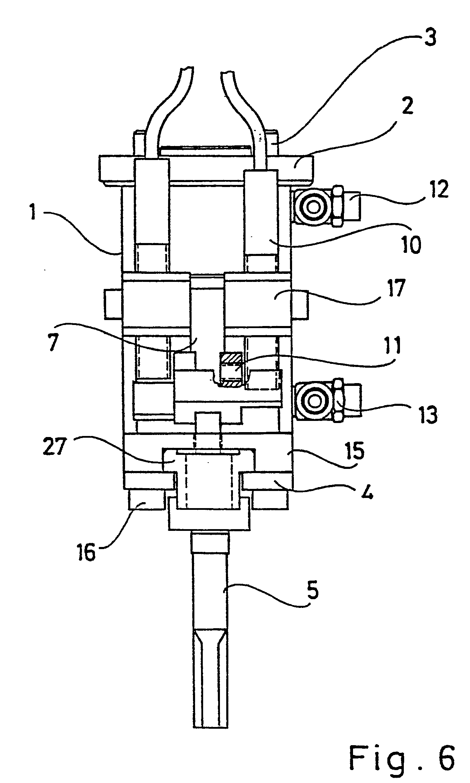

Die Fig. 5 und 6 zeigen den Gegenstand gemäss Fig. 4 in Draufsicht und in um 90° gedrehter Seitenansicht. Zu diesen Figuren bedarf es angesichts der wiederkehrenden Bezugszeichen gemäss den Fig. 1 bis 4 keiner nochmaligen Erläuterung.

Wie ersichtlich, üben die Greiferbacken 5 eine geradlinige, gegenseitige Bewegung entlang der Führungsleisten 4 aus, wobei die Greifkraft über den gesamten Hub der Greiferbacken praktisch gleich gross ist. Die Vorrichtung baut sehr kompakt, da sie im wesentlichen nur aus dem Antriebsmechanismus, den daran angelenkten, einfachen Winkelhebeln sowie den Greiferbacken besteht.

## Patentansprüche

1. Greifvorrichtung, mit einem Greifergrundkörper (1) und einem mit diesem fest verbundenen Antriebsmechanismus, der ein axial verschiebbar gelagertes Stellglied (18, 19, 20) hat, das zwischen seinen beiden Stirnenden mit symmetrisch um die Stellgliedachse angeordneten und sich senkrecht zu dieser erstreckenden Ausnehmungen (23) versehen ist, in welche die einen Enden von Winkelhebeln (7) eingreifen, die an ihrer Knickstelle am Greifergrundkörper schwenkbar gelagert sind und mit ihren anderen Enden, die je in einer die Stellgliedachse aufnehmenden Ebene schwenkbar sind, an Greiferbacken (5) angreifen, denen Führungsmittel zugeordnet sind, welche bei einem durch die Schwenkhebel hervorgerufenen Verschieben der Greiferbacken quer zur Stellgliedachse ein Kippen der Greiferbacken verhindern, dadurch gekennzeichnet, dass die Greiferbacken (5) mit Greiferbackenfüssen (27) entlang gestellfester, geradlinig und mindestens annähernd im rechten Winkel zur Stellgliedachse verlaufender Führungsleisten (4) des Führungsmittels verschiebbar geführt sind, und dass die den Greiferbacken (5) zugeordneten Enden der Winkelhebel (7) in zur Stellgliedachse parallele Ausnehmungen (26) der Greiferbackenfüsse (27) im wesentlichen spielfrei eingreifen.

2. Greifvorrichtung nach Anspruch 1, dadurch gekennzeichnet, dass der Greifergrundkörper (1) durch das Gehäuse des Antriebsmechanismus gebildet ist, das mit seinem den Greiferbacken (5) abgewandten Ende (Deckel 2) an einem Manipulator, einem Maschinengestell oder dgl. befestigbar ist und am anderen Ende die Führungsleisten (4) trägt, und dass die Winkelhebel (7) durch Gehäuseöffnungen auf das Stellglied (18, 19, 20) geführt sind.

3. Greifvorrichtung nach Anspruch 1 oder 2, dadurch gekennzeichnet, dass die Ausnehmungen des Stellgliedes (18 bis 20) durch eine Umfangsnut (23) eines Stellgliedschaftes (18) gebildet sind.

4. Greifvorrichtung nach einem der vorhergehenden Ansprüche, dadurch gekennzeichnet, dass bei einem pneumatisch betätigbaren Antriebsmechanismus das Stellglied (18 bis 20) aus dem Schaft (18) und von diesem beiderends getragenen Kolben (19, 20) gebildet ist, dass das Gehäuse (1) des Antriebsmechanismus auf den schaftabgewandten Seiten der Kolben Zylinderräume (21, 22) bildet und dass diese wahlweise mit dem Druckmedium beaufschlagbar sind.

## Claims

1. Gripping device, comprising a basic gripper body (1) and a drive mechanism which is permanently connected to this body and which has an axially displaceably supported actuator (18, 19, 20) which is provided between its two front ends with recesses (23) which are symmetrically arranged around the actuator axis and extend perpendicularly to the latter and which are engaged by the one ends of angle levers (7) which are swivellably supported at their bend at the basic gripper body and are connected at their other ends, which are each swivellable in a plane which includes the actuator axis, to gripper jaws (5) which are associated with guide means which prevent a tilting of the gripper jaws during a displacement, caused by the swivel levers, of the gripper jaws transversely with respect to the actuator axis, characterised in that the gripper jaws (5) are carried with gripper jaw feet (27) along frame-fixed guide rails (4), which extend in a straight line and at least approximately at a right angle to the actuator axis, of the guide means and that the ends associated with the gripper jaws (5) of the angle levers (7) engage, essentially without play, recesses (26) which are parallel to the actuator axis, of the gripper jaw feet (27).

2. Gripping device according to Claim 1, characterised in that the basic gripper body (1) formed by the housing of the drive mechanism which can be attached with its end (cover 2) facing away from the gripper jaws (5) to a manipulator, a machine frame or similar, and carries at the other end the guide rails (4) and that the angle levers (7) are passed through housing openings to the actuator (18, 19, 20).

3. Gripping device according to Claim 1 or 2, characterised in that the recesses of the actuator (18-20) are formed by a circumferential groove (23) of an actuator shaft (18).

4. Gripping device according to one of the preceding claims, characterised in that in a pneumatically actuatable drive mechanism, the actuator (18-20) is formed of the shaft (18) and pistons (19, 20) carried by this shaft on both ends, that the housing (1) of the drive mechanism forms cylinder spaces (21, 22) on the sides of the pistons facing away from the shaft and that the pressure medium can be optionally applied to these spaces.

**Revendications**

1. Pince de préhension, avec un corps principal de pince (1) et un mécanisme d'entraînement, lié rigidement avec celui-ci, qui possède un organe de réglage (18, 19, 20), guidé de manière mobile axialement, qui possède entre ses deux extrémités frontales des évidements (23), disposés symétriquement autour de l'axe de l'organe de réglage et s'étendant verticalement par rapport à celui-ci, dans lesquels engrènent une extrémité de levier coudés (7), qui sont guidés de manière oscillante sur le corps principal de pince, en leur point de flexion et qui engrènent chacune avec leur autre extrémité dans des mâchoires de pince (5), de manière oscillante, dans un plan recevant l'axe de l'organe de réglage et dont les moyens de guidage sont coordonnés, lesquel empêchent un renversement des mâchoires de pince dans le cas d'un déplacement des mâchoires de pinces qui serait dû aux leviers oscillants et se ferait perpendiculairement à l'axe de l'organe de réglage, caractérisée en ce que les mâchoires de pince (5), avec les pieds de mâchoires de pinces (27), sont guidés de manière mobile, le long de bandes de guidage (4) du moyen de guidage, fixes par rapport au bâti, rectilignes et au moins de manière approchée à angle droit par rapport à l'axe de l'organe de réglage, et en ce que les extrémités des leviers coudés (7), qui sont affectés aux mâchoires de pince (5) engrènent, essentiellement sans jeu, dans des évidements (26) des pieds de mâchoires de pinces (27), parallèles à l'axe de l'organe de réglage.

2. Equipement de préhension selon la revendication 1, caractérisé en ce que le corps principal de pince (1) est formé par le carter du mécanisme d'entraînement, qui peut être fixé avec son extrémité opposée (couvercle 2) aux mâchoires de pinces à un manipulateur, un bâti de machine ou similaire et qui porte à l'autre extrémité les bandes de guidage (4), et en ce que les leviers coudés (7) sont guidés, au travers d'ouverture du carter, sur l'organe de réglage (18, 19, 20).

3. Equipement de préhension selon la revendication 1 ou 2, caractérisé en ce que les évidements de l'organe de réglage (18 à 20) sont formés par une gorge périphérique (23) d'une tige de lorgane de réglage (18).

4. Equipement de préhension selon l'une des revendications précédentes, caractérisé en ce que, dans le cas d'un mécanisme d'entraînement actionnable pneumatiquement, l'organe de réglage (18 à 20) est formé de la tige (18) et des pistons (19, 20) qui sont portés par les deux côtés de celle-ci, en ce que le carter (1) du mécanisme d'entraînement forme des enceintes cylindriques (21, 22) aux côtés des pistons qui sont opposés à la tige et en ce que ceux-ci peuvent au choix être soumis à l'action du fluide sous pression.

Fig.1

Fig.2

Fig.3

Fig. 4

Fig. 5

Fig. 6